# EUROPEAN PATENT SPECIFICATION

(11) **EP 3 499 950 B1**
(45) Date of publication and mention of the grant of the patent: **19.01.2022**
(21) Application number: 18788986.0
(22) Date of filing: 22.06.2018
(51) Int. Cl.: H04W 24/10, H04L 1/00

(54) **CHANNEL MEASUREMENT METHOD AND USER EQUIPMENT**
KANALMESSVERFAHREN UND BENUTZERGERÄT
PROCÉDÉ DE MESURE DE CANAL ET ÉQUIPEMENT UTILISATEUR

(30) Priority: 20.10.2017 CN 201710987133; 22.01.2018 CN 201810061105
(43) Date of publication of application: 19.06.2019
(73) Proprietor: HUAWEI TECHNOLOGIES CO., LTD., Shenzhen Guangdong 518129 (CN)
(72) Inventor: WU, Ye, Shenzhen Guangdong 518129 (CN); JIN, Huangping, Shenzhen Guangdong 518129 (CN); CHEN, Xiaobo, Shenzhen Guangdong 518129 (CN); BI, Xiaoyan, Shenzhen Guangdong 518129 (CN)
(74) Representative: Thun, Clemens
(86) International application number: PCT/CN2018/092312
(87) International publication number: WO 2019/076077

(56) References cited:
- EP-A1- 2 763 338
- WO-A1-2013/020483
- WO-A1-2013/166709
- CN-A- 101 188 816
- CN-A- 106 817 722
- ERICSSON: "On dynamic triggering for CSI reports and CSI-RS", 3GPP DRAFT; R1-1718438 ON DYNAMIC TRIGGERING FOR CSI REPORTS AND CSI-RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Prague, Czech Republic; 20171009 - 20171013 8 October 2017 (2017-10-08), XP051341620, Retrieved from the Internet: URL:http://www.3gpp.org/ftp/Meetings_3GPP_ SYNC/RAN1/Docs/ [retrieved on 2017-10-08]
- SAMSUNG: "Discussion on CSI-RS Resource Activation", 3GPP DRAFT; R1-1717611 NR CSI-RS RESOURCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 8 October 2017 (2017-10-08), XP051340797, Retrieved from the Internet: URL:http://www.3gpp.org/ftp/Meetings_3GPP_ SYNC/RAN1/Docs/ [retrieved on 2017-10-08]
- ERICSSON: "A comparison of CSI-RS activation schemes based on MAC CE and DCI", 3GPP DRAFT; R1-1718439 A COMPARISON OF CSI-RS ACTIVATION SCHEMES BASED ON MAC CE AND DCI, 3RD GENERATION PARTNERSHIP PROJECT (3GPP), MOBILE COMPETENCE CENTRE ; 650, ROUTE DES LUCIOLES ; F-06921 SOPHIA , vol. RAN WG1, no. Prague, Czech Republic; 20171009 - 20171013 8 October 2017 (2017-10-08), XP051341621, Retrieved from the Internet: URL:http://www.3gpp.org/ftp/Meetings_3GPP_ SYNC/RAN1/Docs/ [retrieved on 2017-10-08]
- "3 Generation Partnership Project; Technical Specification Group Radio Access Network; Evolved Universal Terrestrial Radio Access (E-UTRA); Multiplexing and channel coding (Release 14)", 3GPP STANDARD ; TECHNICAL SPECIFICATION ; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V14.4.0, 26 September 2017 (2017-09-26), pages 1-198, XP051337332, [retrieved on 2017-09-26]

## Description

### TECHNICAL FIELD

Embodiments of the present invention relate to channel measurement technologies, and in particular, to a channel measurement method and user equipment.

### BACKGROUND

A transmission effect of wireless communications is closely related to a channel environment. Therefore, it is essentially important to select a transmission parameter matching the channel environment in wireless communications. For example, in a relatively good channel environment, a relatively radical modulation and coding scheme (Modulation and Coding Scheme, MCS) may be selected to improve a transmission throughput, but in a relatively poor channel environment, a relatively conservative MCS may be selected to improve transmission robustness.

An existing wireless communications system usually uses, for example without limitation to, channel state information (Channel State Information, CSI) to represent a channel environment. For example, the channel state information (Channel State Information, CSI) may include, for example without limitation to, one or several of the following types of information: a channel quality indicator (Channel Quality Indicator, CQI), a precoding matrix indicator (Precoding Matrix Indicator, PMI), a precoding type indicator (Precoding Type Indicator, PTI), a CSI-reference signal resource indicator (CSI-RS Resource Indicator, CRI), and a rank indication (Rank Indication, RI).

An existing frequency division duplex (Frequency Division Duplex, FDD) wireless communications system usually determines the CSI in a dynamic channel measurement manner. An access device sends a CSI measurement indicator to user equipment based on a dynamic channel measurement. After receiving the measurement indicator, the user equipment performs channel measurement based on a reference signal (Reference Signal, RS) transmitted by the access device, to obtain a CSI, and feeds back the CSI to the access device. Each dynamic channel measurement needs to be triggered by the access device. Therefore, the dynamic channel measurement may also be referred to as an aperiodic measurement.

To adapt to a future communication requirement, a possibility of semi-persistent (Semi-Persistent) channel measurement is being explored in a next generation wireless communications standard. In comparison with the dynamic channel measurement, in the semi-persistent channel measurement, the user equipment measures and feeds back the CSI based on a preset period. Therefore, the semi-persistent channel measurement may also be referred to as a periodic measurement. It may be learned that, in comparison with the dynamic channel measurement, the semi-persistent channel measurement helps reduce signaling overheads caused by a channel measurement.

However, the semi-persistent channel measurement is still in a research and development phase, and many details need to be clarified. For example, an urgent problem needs to be resolved currently: how to instruct the user equipment to perform the semi-persistent channel measurement.

ERICSSON, "On dynamic triggering for CSI reports and CSI-RS", vol. RAN WG1, no. Prague, Czech Republic; 20171009 - 20171013, (20171008), 3GPP DRAFT; R1-1718438 ON DYNAMIC TRIGGERING FOR CSI REPORTS AND CSI-RS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, URL: http://www.3gpp.org/ftp/Meetings_3GPP_SYNC/RANl/Docs/, (20171008), XP051341620, refers to on dynamic triggering for CSI reports and CSI-RS.

EP 2 763 338 discloses a method and an apparatus for transmitting periodic channel state information (CSI) in a wireless communication system. User equipment activates an uplink (UP) semi-persistent scheduling (SPS) session allocated to a secondary cell (SCell), periodically transmits the periodic CSI through a physical uplink shared channel (PUSCH) to a base station on the basis of the UL SPS session allocated to the SCell, and releases the UL SPS session allocated to the SCell.

### SUMMARY

The present invention is defined by the independent claims. The dependent claims comprise further developments.

In view of this, it is necessary to provide a channel measurement method, to instruct to start a semi-persistent channel measurement.

In addition, user equipment is provided, to instruct to start a semi-persistent channel measurement.

According to a first aspect of embodiments of the present invention, a channel measurement method is provided, including:
receiving, by an user equipment, first transmission control information;
starting, by the user equipment, a semi-persistent channel measurement when the first transmission control information meets a first preset condition, where the first preset condition includes at least one of the following conditions:
   the first transmission control information is downlink control information (DCI), where the DCI has a preset format;
   the first transmission control information is associated with a radio network temporary identifier RNTI;
   the semi-persistent channel measurement RNTI being obtained based on a user identifier according to a correspondence table of the semi-persistent channel measurement RNTI and the user identifier; and
   a value of a first group of information in the first transmission control information meets a first preset rule when the DCI has the preset format, wherein the first group of information comprises a redundancy version, RV, and a hybrid automatic repeat request, HARQ process number, transmit power control, TPC, information, and a new data indicator, NDI, a value of a first group of information in the first transmission control information meets a first preset rule comprises all bits of the RV are 0, all bits of the HARQ process number are 0, all bits of the TPC information are 0 and all bits of the NDI are set to 0.

In a possible design, there are one or more semi-persistent channel measurements.

According to a further embodiment of the present invention, the channel measurement method further comprises:
receiving, by the user equipment, second transmission control information;
stopping, by the user equipment, a second semi-persistent channel measurement when the second transmission control information meets a second preset condition, where the second preset condition includes at least one of the following conditions:
   the second transmission control information is associated with a radio network temporary identifier RNTI of a second preset type; and
a value of a second group of information in the second transmission control information meets a second preset rule, wherein the second group of information comprises a redundancy version, RV, a hybrid automatic repeat request, HARQ process number, and a modulation and coding scheme, MCS, the a value of a second group of information in the second transmission control information meets a second preset rule comprises all bits of the RV are 0, all bits of the HARQ process number are 0, and all bits of the MCS are 1.

According to a second aspect of the embodiments of the present invention, user equipment is provided, including:
a transceiver module, configured to receive first transmission control information; and
a processing module, configured to start a semi-persistent channel measurement when the first transmission control information meets a first preset condition, where the first preset condition includes at least one of the following conditions:
   the first transmission control information is downlink control information (DCI), where the DCI has a preset format;
   the first transmission control information is associated with a radio network temporary identifier RNTI;
   the semi-persistent channel measurement RNTI being obtained based on a user identifier according to a correspondence table of the semi-persistent channel measurement RNTI and the user identifier; and
   a value of a first group of information in the first transmission control information meets a first preset rule when the DCI has the preset format, wherein the first group of information comprises a redundancy version, RV, and a hybrid automatic repeat request, HARQ process number, transmit power control, TPC, information, and a new data indicator, NDI, a value of a first group of information in the first transmission control information meets a first preset rule comprises all bits of the RV are 0, all bits of the HARQ process number are 0, all bits of the TPC information are 0 and all bits of the NDI are set to 0.

According to an embodiment of the second aspect, the transceiver module is configured to receive second transmission control information; and
the processing module is configured to stop a second semi-persistent channel measurement when the second transmission control information meets a second preset condition, where the second preset condition includes at least one of the following conditions:
the second transmission control information is associated with a radio network temporary identifier RNTI of a second preset type; and
a value of a second group of information in the second transmission control information meets a second preset rule.

### BRIEF DESCRIPTION OF DRAWINGS

FIG. 1 is an example schematic diagram of a wireless communications network according to an embodiment of the present invention;
FIG. 2 is an example flowchart of a channel measurement method according to an embodiment of the present invention;
FIG. 3 is an example flowchart of a channel measurement method according to an embodiment of the present invention;
FIG. 4 is an example flowchart of a channel measurement method according to an embodiment of the present invention;
FIG. 5 is an example flowchart of a channel measurement method according to an embodiment of the present invention;
FIG. 6 is an example flowchart of a channel measurement method according to an embodiment of the present invention;
FIG. 7 is an example flowchart of a configuration method according to an embodiment of the present invention;
FIG. 8 is an example flowchart of a configuration method according to an embodiment of the present invention;
FIG. 9 is an example schematic diagram of a logical structure of a communications device according to an embodiment of the present invention; and
FIG. 10 is an example schematic diagram of a hardware structure of a communications device according to an embodiment of the present invention.

### DESCRIPTION OF EMBODIMENTS

A next generation wireless communications system being developed currently may be referred to as a new radio (New Radio, NR) system or a 5G system. Latest research progress shows that a next generation wireless communications standard supports a semi-persistent channel measurement, and CSI obtained through semi-persistent channel measurement may be transmitted by using a physical uplink shared channel (Physical Uplink Shared Channel, PUSCH). In support of the semi-persistent channel measurement, a problem that needs to be first resolved is how to instruct user equipment to start and stop the semi-persistent channel measurement. An embodiment of the present invention provides a technical solution, to help resolve the foregoing problem. With reference to the accompanying drawings and a specific embodiment, the technical solution provided in this embodiment of the present invention is described below.

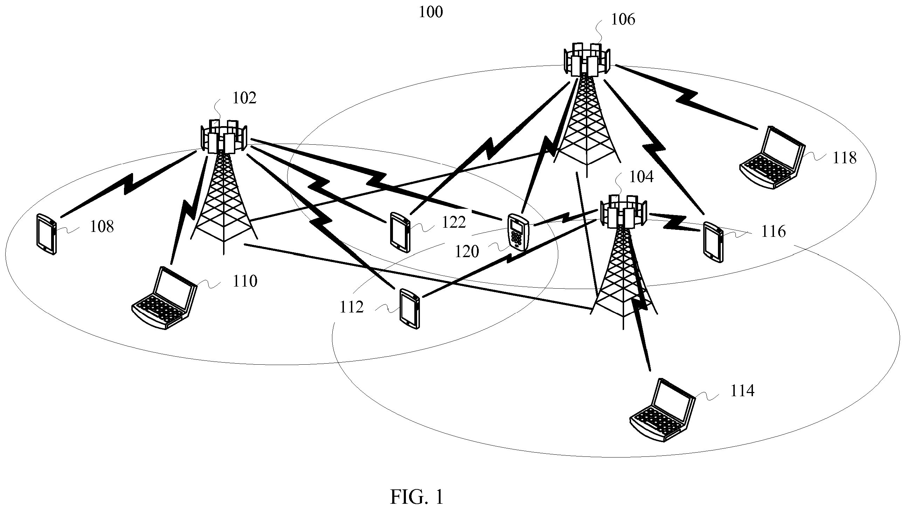

FIG. 1 is an example schematic diagram of a wireless communications network 100 according to an embodiment of the present invention. As shown in FIG. 1, the wireless communications network 100 includes base stations 102, 104, and 106 and terminal devices 108, 110, 112, 114, 116, 118, 120, and 122. The base stations 102, 104, and 106 may communicate with each other by using backhaul (backhaul) links (as shown by straight lines between the base stations 102, 104, and 106). The backhaul link may be a wired backhaul link (for example, an optical fiber or a copper cable) or a wireless backhaul link (for example, a microwave). The terminal devices 108, 110, 112, 114, 116, 118, 120, and 122 may communicate with corresponding base stations 102, 104, and 106 by using radio links (for example, as shown by fold lines between the base stations 102, 104, and 106 and the terminal devices 108, 110, 112, 114, 116, 118, 120, and 122).

The base stations 102, 104, and 106 usually provide, as access devices, a radio access service for the terminal devices 108, 110, 112, 114, 116, 118, 120, and 122 that generally serve as user equipments. Specifically, each base station is corresponding to one service coverage area (which may be referred to as a cellular, as shown in each elliptic area in FIG. 1). A terminal device that enters the area may communicate with a base station by using a radio signal, to accept a radio access service provided by the base station. Service coverage areas of the base stations may overlap. A terminal device in an overlapping area may receive radio signals from a plurality of base stations. Therefore, these base stations may coordinate with each other, to provide a service for the terminal device. For example, the plurality of base stations may provide a service for the terminal device in the overlapping area by using a coordinated multipoint (Coordinated multipoint, CoMP) technology. For example, as shown in FIG. 1, a service coverage area of the base station 102 overlaps a service coverage area of the base station 104, and the terminal device 112 falls into an overlapping area. Therefore, the terminal device 112 may receive radio signals from the base station 102 and the base station 104. The base station 102 and the base station 104 may coordinate with each other, to provide a service for the terminal device 112. For another example, as shown in FIG. 1, a common overlapping area exists in service coverage areas of the base stations 102, 104, and 106, and the terminal device 120 falls into the overlapping area. Therefore, the terminal device 120 may receive radio signals from the base stations 102, 104, and 106. The base stations 102, 104, and 106 may coordinate with each other, to provide a service for the terminal device 120.

Depending on a used wireless communications technology, the base station may also be referred to as a NodeB (NodeB), an evolved NodeB (evolved NodeB, eNodeB), an access point (Access Point, AP), or the like. In addition, based on a size of a provided service coverage area, the base station may be further classified into a macro base station for providing a macro cell (Macro cell), a micro base station for providing a micro cell (Pico cell), a femto base station for providing a femto cell (Femto cell), and the like. With continuous evolution of the wireless communications technologies, a future base station may use another name.

The terminal devices 108, 110, 112, 114, 116, 118, 120, and 122 may be various wireless communications devices having a wireless communication function, for example without limitation to, a mobile cellular phone, a cordless phone, a personal digital assistant (Personal Digital Assistant, PDA), a smart phone, a notebook computer, a tablet computer, a wireless data card, a wireless modem (Modulator demodulator, Modem), or a wearable device such as a smartwatch. With emergence of the Internet of Things (Internet of Things, IOT) technology and the vehicle-to-everything (Vehicle-to-everything, V2X) technology, more conventional devices having no communication function, for example without limitation to, a domestic appliance, a transportation tool, a tool device, a service device, and a service facility, start to obtain a wireless communication function by configuring a wireless communications unit, to access a wireless communications network and receive remote control. These devices have the wireless communication function because they are equipped with the wireless communications unit. Therefore, these devices also belong to wireless communications devices. In addition, the terminal devices 108, 110, 112, 114, 116, 118, 120, and 122 may be further referred to as mobile stations, mobile devices, mobile terminals, wireless terminals, handheld devices, clients, and the like.

The base stations 102, 104, and 106 and the terminal devices 108, 110, 112, 114, 116, 118, 120, and 122 may be equipped with a plurality of antennas, to support an MIMO (multiple-input multiple-output, Multiple-Input Multiple-Output) technology. Further, the base stations 102, 104, and 106 and the terminal devices 108, 110, 112, 114, 116, 118, 120, and 122 may support not only a single-user MIMO (Single User MIMO, SU-MIMO) technology but also a multi-user MIMO (Multi-User MIMO, MU-MIMO) technology. The MU-MIMO technology may be implemented based on a space division multiple access (Space Division Multiple Access, SDMA) technology. Because a plurality of antennas are configured, the base stations 102, 104, and 106 and the terminal devices 108, 110, 112, 114, 116, 118, 120, and 122 may further flexibly support a single-input single-output (Single-Input Single-Output, SISO) technology, a single-input multiple-output (Single-Input Multiple-Output, SIMO) technology, and a multiple-input-single-output (Multiple-Input-Single-Output, MISO) technology, to implement various diversity (for example without limitation to, transmit diversity and receive diversity) and multiplexing technologies. The diversity technology may include, for example without limitation to, a transmit diversity (Transmit Diversity, TD) technology and a receive diversity (Receive Diversity, RD) technology. The multiplexing technology may be a spatial multiplexing (Spatial Multiplexing) technology. In addition, the foregoing technologies may further include a plurality of implementation solutions. For example, the transmit diversity technology may include diversity manners, for example without limitation to, space time transmit diversity (Space Time Transmit Diversity, STTD), space-frequency transmit diversity (Space-Frequency Transmit Diversity, SFTD), time switched transmit diversity (Time Switched Transmit Diversity, TSTD), frequency switched transmit diversity (Frequency Switched Transmit Diversity, FSTD), orthogonal transmit diversity (Orthogonal Transmit Diversity, OTD), and cyclic delay diversity (Cyclic Delay Diversity, CDD), and diversity manners obtained after the foregoing diversity manners are derived, evolved, and combined. For example, currently, transmit diversity manners such as space time block coding (Space Time Block Coding, STBC), space frequency block coding (Space Frequency Block Coding, SFBC), and CDD are used in the LTE (Long Term Evolution, Long Term Evolution) standard. The transmit diversity is described above in general by using an example. A person skilled in the art should understand that, in addition to the foregoing example, the transmit diversity is further implemented in a plurality of other manners. Therefore, the foregoing descriptions shall not be understood as a limitation on the technical solutions of the present invention. The technical solutions of the present invention should be understood as applicable to various possible transmit diversity schemes.

In addition, the base stations 102, 104, and 106 and the terminal devices 108, 110, 112, 114, 116, 118, 120, and 122 may communicate with each other by using various wireless communications technologies, for example without limitation to, a Time Division Multiple Access (Time Division Multiple Access, TDMA) technology, a Frequency Division Multiple Access (Frequency Division Multiple Access, FDMA) technology, a Code Division Multiple Access (Code Division Multiple Access, CDMA) technology, a Time Division-Synchronous Code Division Multiple Access (Time Division-Synchronous Code Division Multiple Access, TD-SCDMA) technology, an orthogonal frequency division multiple access (Orthogonal FDMA, OFDMA) technology, a single carrier frequency division multiple access (Single Carrier FDMA, SC-FDMA) technology, and a space division multiple access (Space Division Multiple Access, SDMA) technology, and evolved and derived technologies of these technologies. As a radio access technology (Radio Access Technology, RAT), the foregoing wireless communications technology is adopted in a plurality of wireless communications standards, thereby constructing various wireless communications systems (or networks) that are widely known to the people today, including but not limited to Global System for Mobile Communications (Global System for Mobile Communications, GSM), CDMA 2000, Wideband CDMA (Wideband CDMA, WCDMA), WiFi defined in the family of 802.22 standards, Worldwide Interoperability for Microwave Access (Worldwide Interoperability for Microwave Access, WiMAX), Long Term Evolution (Long Term Evolution, LTE), LTE Advanced (LTE-Advanced, LTE-A), evolved systems of these wireless communications systems, and the like. Unless otherwise specified, the technical solutions provided in the embodiments of the present invention may be applied to the foregoing various wireless communications technologies and wireless communications systems. In addition, the terms "system" and "network" can be interchanged with each other.

It should be noted that the wireless communications network 100 shown in FIG. 1 is merely used as an example, and is not intended to limit the technical solutions of the present invention. A person skilled in the art should understand that, in a specific implementation process, the wireless communications network 100 may further include another device. In addition, a quantity of base stations and a quantity of terminal devices may be configured as required.

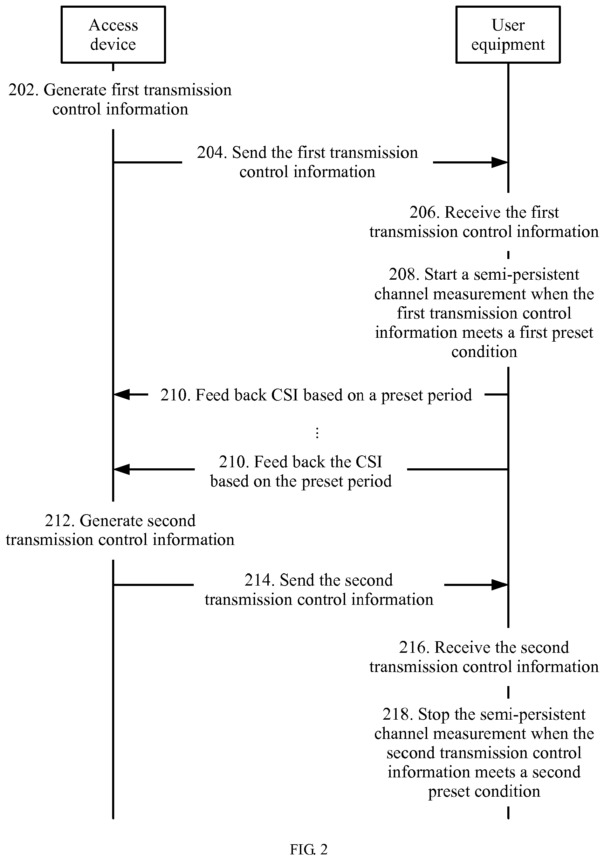

FIG. 2 is an example flowchart of a channel measurement method 200 according to an embodiment of the present invention. As shown in FIG. 2, the method 200 is performed jointly by an access device and user equipment. In a specific implementation process, the access device may be base stations 102, 104, and 106 shown in FIG. 1, and the user equipment may be terminal devices 108, 110, 112, 114, 116, 118, 120, and 122 shown in FIG. 1.

Step 202: The access device generates first transmission control information.

Specifically, the first transmission control information is a downlink control information (Downlink Control Information, DCI).

Step 204: The access device sends the first transmission control information, where the first transmission control information meets a first preset condition, to start a semi-persistent channel measurement, and the first preset condition includes the following conditions:
the first transmission control information is associated with a radio network temporary identifier (Radio Network Temporary Identifier, RNTI) of a first preset type; and
a value of a first group of information in the first transmission control information meets a first preset rule.

In a specific implementation process, the first preset condition may be any one of the foregoing conditions. In addition, the first preset condition may also be a combination of the foregoing conditions. In other words, meeting the first preset condition means that both of the foregoing conditions need to be met. In addition, the first preset condition may further include other conditions. For example, if the first transmission control information is the DCI, the other conditions may include, for example, that a DCI format is a preset format. Generally, there exist DCIs of multiple formats. The different formats mean that functions of the DCI are different. For example, DCI for scheduling a PUSCH has a specific format. Still further, the preset format may be an existing format or a new format.

The foregoing first condition is related to an RNTI. Generally, the transmission control information is associated with an RNTI. The RNTI is used to indicate user equipment to which the transmission control information points; to be specific, the transmission control information should be received by the user equipment. The RNTI may be transmitted in various manners. For example, the RNTI may be directly carried in the transmission control information as an information field. For another example, in the Long Term Evolution (Long Term Evolution, LTE) standard, the access device may scramble a cyclic redundancy check (Cyclic Redundancy Check, CRC) field of the DCI by using the RNTI, to transmit the RNTI by using the CRC field. For related technical content, refer to the prior art. Details are not described herein. A specific manner of transmitting the RNTI is not limited in this embodiment of the present invention.

Generally, there are a plurality of types of RNTIs, and the different types of RNTIs have different functions. For example, in the LTE standard, the RNTI includes, for example without limitation to, a paging RNTI (Paging RNTI, P-RNTI), a system information RNTI (System Information RNTI, SI-RNTI), a random access RNTI (Random Access RNTI, RA-RNTI), a cell RNTI (Cell RNTI, C-RNTI), a semi-persistent scheduling cell RNTI (Semi-Persistent Scheduling C-RNTI, SPS-C-RNTI), and an uplink semi-persistent scheduling vehicle-to-everything RNTI (Uplink Semi-Persistent Scheduling V2X RNTI, UL-SPS-V-RNTI). In addition, a plurality of RNTIs may be allocated to same user equipment, and these RNTIs have different types.

In the technical solution provided in this embodiment of the present invention, the RNTI of the first preset type is a semi-persistent channel measurement RNTI.

The semi-persistent channel measurement RNTI is a new RNTI introduced in this embodiment of the present invention. The RNTI may be allocated by the access device to the user equipment. A specific allocation procedure is described below in detail. In addition, the RNTI may be obtained by the user equipment based on other user identifiers that can be used to identify the user equipment. The other user identifiers may be, for example without limitation to, an RNTI of another type. It is not difficult to understand that a correspondence table of the semi-persistent channel measurement RNTI and the other user identifiers may be established, so that the user equipment searches for the semi-persistent channel measurement RNTI based on the other user identifiers. In addition, the user equipment may also generate the semi-persistent channel measurement RNTI based on a preset generation rule and the other user identifiers. In addition, different semi-persistent channel measurement RNTIs may be further set for starting the semi-persistent channel measurement and stopping the semi-persistent channel measurement, for example, a semi-persistent channel measurement starting RNTI and a semi-persistent channel measurement stopping RNTI. In this case, when the semi-persistent channel measurement is started, a used RNTI of the first preset type is the semi-persistent channel measurement starting RNTI, and when the semi-persistent measurement is stopped, a used RNTI of the first preset type is the semi-persistent channel measurement stopping RNTI.

The foregoing second condition is related to the value of the first group of information in the first transmission control information. Specifically, the value of the information needs to meet the first preset rule. For example, the first group of information may include transmit power control (Transmit Power Control, TPC) information, demodulation reference signal (Demodulation Reference Signal, DMRS) cyclic shift information, MCS information, and CSI request information. That the value of the information meets the first preset rule may be: a value of the transmit power control information is a first preset value, a value of the demodulation reference signal cyclic shift information is a second preset value, a value of the modulation and coding scheme MCS information falls into a third preset interval, and a value of the CSI request information is a fourth preset value.

The first group of information includes the following types of information: new data indicator (New Data Indicator, NDI) information, TPC information, redundancy version (Redundancy Version) information, and hybrid automatic repeat request (Hybrid Automatic Repeat Request, HARQ) process number information. That the value of the information meets the first preset rule may be: a value of the NDI information is a thirty-first preset value (for example, all bits of the information are set to 0), a value of the TPC information is a thirty-second preset value (for example, all bits of the information are set to 0), a value of the redundancy version information is a thirty-third preset value (for example, all bits of the information are set to 0), and a value of the HARQ information is a thirty-fourth preset value (for example, all bits of the information are set to 0).

For technical definition of the foregoing information, refer to the prior art. Specifically, for the TPC information, refer to information about a TPC command for scheduled PUSCH (TPC command for scheduled PUSCH) in the LTE standard; for the DMRS cyclic shift information, refer to cyclic shift (Cyclic shift DMRS) information in the LTE standard; for the MCS information, refer to modulation and coding scheme and redundancy version (Modulation and Coding Scheme and Redundancy Version) information in the LTE standard; and for the CSI request information, refer to CSI request (CSI request) information in the LTE standard. For functions and meanings of the first group of information, a second group of information, and other related information mentioned in this specification, refer to related definitions in the LTE standard or a latest NR related standard or contribution. Details are not described herein. The technical definition of the foregoing information is clearly described in the prior art, and details are not described in this embodiment of the present invention. It should be noted that, a person skilled in the art should understand that, in addition to the first group of information, the first transmission control information may further include other information. Information content included in the first transmission control information is not limited in this embodiment of the present invention. In addition, data carried in a transmission unit (for example without limitation to, a subframe) in which the first transmission control information is located may include only initially transmitted data, but does not include retransmitted data. In other words, the transmission unit in which the first transmission control information is located is used only for initial transmission, but not used for retransmission. In addition, the transmission unit carries only uplink scheduling information, but does not carry downlink scheduling information. For another example, the transmission unit does not carry hybrid automatic repeat request (Hybrid Automatic Repeat Request, HARQ) information. The foregoing characteristics of the first transmission control information are similar to those of an existing DCI format 0. Therefore, information content included in the first transmission control information may be learned with reference to the existing DCI format 0.

In addition, the first group of information may include at least one type of information. It is not difficult to understand that at least one type of new information may be further introduced to achieve the foregoing purpose. In this case, the first group of information may use existing information, the introduced new information, or a combination thereof. For example, when the first group of information includes one piece of information, and the information is the introduced new information, then the first preset rule may be set as: a preset value is assigned to the information. For example, if the information includes two bits, then the first preset rule may be set as: when the two bits are 01, the semi-persistent channel measurement is started.

A specific example of the first preset condition is as follows:

**Table 1**

| **DCI format 0** | |
|---|---|
| TPC command for scheduled PUSCH | All bits in a bitmap (bitmap) corresponding to the information are 0, and the bitmap includes at least one bit. |
| Cyclic shift DMRS | If the information exists, all bits in a bitmap corresponding to the information are 0, and the bitmap includes at least one bit. |
| Modulation and coding scheme and redundancy version | Solution 1: Corresponding bits (for example, most significant bits (Most Significant Bit, MSB) in a bitmap corresponding to the information are set as not to exceed a specific value, for example, 15. The bitmap includes at least one bit. |
| | Solution 2: No limitation is imposed. |
| | Solution 3: A reserved value (for example, 11101) is assigned to an |
| | MCS. However, the reserved value indicates an authentic and valid MCS. The authentic and valid MCS is an MCS used for reporting a CSI in the scmi-pcrsistcnt channel measurement, and in addition to the reserved value, the available MCS has another index value, for example, 01111. It may be learned that, different from a conventional solution in which a reserved value does not indicate an authentic and valid MCS, a meaning of the reserved value is modified in this embodiment of the present invention, so that an MCS indicated by the reserved value is authentic and valid, and the authentic and valid MCS has another index value. For example, the MCS includes two index values: 11101 and 01111, where 11101 is a reserved value, and 01111 is a non-reserved value. |
| CSI request | A bitmap of the information is set to a value for starting the semi-persistent channel measurement, where the bitmap includes at least one bit. For example, the bitmap may be used to indicate a CSI-RS resource used for a channel measurement. When an allocated resource is a valid resource, the bitmap is used for starting the semi-persistent channel measurement, to be specific, a value in the bitmap represents the valid resource. In contrast to the valid resource, an invalid resource may correspond to a situation, for example, in which the CSI request is 00000 in the existing LTE standard. |

It may be learned from the foregoing example that values of the foregoing four types of information are limited in the first preset condition, and the DCI format is limited to a format 0.

It should be noted that, in practice, one or more semi-persistent channel measurements may be started. In this case, when a semi-persistent channel measurement is started, the semi-persistent channel measurement that needs to be started may be further indicated, for example, an identifier of the semi-persistent channel measurement is indicated. The identifier may be a newly designed identifier, or may be other identifiers associated with the semi-persistent channel measurement that needs to be started. For example, a channel measurement needs to be performed based on some basic measurement information, and an indication to the basic measurement information may be used to indicate the semi-persistent channel measurement that needs to be started. For example, the channel measurement needs to be performed based on related channel measurement resources. Channel status related information that needs to be measured and reported may be defined based on a related measurement report setting. A measurement object may be a channel measurement or an interference measurement. Therefore, the channel measurement resources, the measurement report setting, a measurement attribute, and other possibly related content may be associated with each other in advance to construct a related information group. In this case, an indication to the information group may be used to represent the semi-persistent channel measurement that needs to be started. For example, an identifier may be assigned to the information group. In this case, the semi-persistent channel measurement that needs to be started may be represented based on the identifier. For example, based on latest research progress of the NR standard, the foregoing group of information associated with each other may be set as a trigger state (Trigger State) or a measurement link (Measurement Link). Therefore, the semi-persistent channel measurement that needs to be started may be indicated by indicating the trigger state or the measurement link. For example, when indicating, an identifier of the trigger state or an identifier of the measurement link may be indicated. Therefore, the first transmission control information may further include the indication on the semi-persistent channel measurement that needs to be started. Still further, the indication may be specifically an indication to information associated with the semi-persistent channel measurement that needs to be started, for example without limitation to, an indication to at least one piece of basic measurement information, for example without limitation to, the trigger state or the measurement link described above. Still further, the indication may be included in CSI request information.

Step 206: The user equipment receives the first transmission control information.

Step 208: The user equipment starts the semi-persistent channel measurement when the transmission control information meets the first preset condition.

It is not difficult to understand that steps 202 to 208 are a procedure for starting the semi-persistent channel measurement.

Step 210: The user equipment feeds back CSI to the access device based on a preset period, and the access device receives the CSI fed back by the user equipment based on the preset period.

Specifically, after starting the semi-persistent channel measurement, the user equipment measures the CSI based on the preset period, and feeds back the CSI to the access device. In a specific implementation process, the preset period may be stipulated in a communications protocol and written into the user equipment and the access device in advance before delivery from a factory, or may be configured by the access device for the user equipment in an interaction process between the access device and the user equipment. In addition, the access device may configure a plurality of preset periods for the user equipment in advance, and indicate, to the user equipment in the interaction process, a preset period that should be used. A specific method for setting the period is not limited in this embodiment of the present invention.

It should be noted that, during a semi-persistent channel measurement, the user equipment may perform a dynamic channel measurement based on an indication of the access device. When the user equipment reports not only CSI obtained based on the semi-persistent channel measurement but also CSI obtained based on the dynamic channel measurement, the access device receives the two types of CSI. In this case, the access device may determine finally used CSI based on one (for example, the CSI obtained based on the dynamic channel measurement is preferentially selected) or both of the two types of CSI, for example, calculating an average value of the two types of CSI. A specific manner of determining the finally used CSI based on the two types of CSI is not limited in this embodiment of the present invention.

In addition, in a semi-persistent channel measurement process, if the access device fails to receive CSI reported by the user equipment for consecutive several times, the access device may stop the semi-persistent channel measurement. To stop the semi-persistent channel measurement, a semi-persistent channel measurement stopping procedure described below may be used, or CSI subsequently fed back by the user equipment may be ignored. A specific operation of stopping the semi-persistent channel measurement by the access device in this case is not limited in this embodiment of the present invention. The several times described above may be one or more times. A specific quantity of times may be preset in the communications protocol. In addition, the access device may also configure the value for the user equipment, for example without limitation to, physical layer signaling, media access control layer signaling, or radio resource control signaling described below.

Step 210 may be referred to as a procedure for the semi-persistent channel measurement. In a specific implementation process, step 210 may be performed at least once.

Step 212: The access device generates second transmission control information.

Specifically, similar to the first transmission control information, the second transmission control information may also be, for example without limitation to, DCI.

Step 214: The access device sends the second transmission control information, where the second transmission control information meets a second preset condition, to stop the semi-persistent channel measurement, where the second preset condition includes at least one of the following conditions:
the second transmission control information is associated with a radio network temporary identifier RNTI of a second preset type; and
a value of a second group of information in the second transmission control information meets a second preset rule.

Similar to the first preset condition, in a specific implementation process, the second preset condition may be any one of the foregoing conditions. In addition, the second preset condition may also be a combination of the foregoing conditions. In other words, meeting the second preset condition means that both of the foregoing conditions need to be met. In addition, the second preset condition may further include other conditions. For example, if the second transmission control information is the DCI, the other conditions may be, for example, that a format (format) of the DCI is a preset format. Still further, the preset format may be an existing format or a new format.

In addition, similar to the RNTI of the first preset type, in the technical solution provided in this embodiment of the present invention, the RNTI of the second preset type may be one of the following types of RNTIs:
a C-RNTI;
an SPS-C-RNTI;
a UL-SPS-V-RNTI; and
a semi-persistent channel measurement RNTI.

It is not difficult to understand that both the first transmission control information and the second transmission control information point to the user equipment. The RNTI in the first transmission control information may be the same as or different from the RNTI in the second transmission control information. A person skilled in the art should understand that a plurality of RNTIs may be allocated to same user equipment, and these RNTIs have different types.

The second group of information may include TPC information, DMRS cyclic shift information, MCS information, and resource allocation information. That the information meets the second preset rule may be: a value of the TPC information is a fifth preset value, a value of the DMRS cyclic shift information is a sixth preset value, a value of the MCS information falls into a seventh preset interval, and a value of the resource allocation information is an eighth preset value.

Alternatively, for another example, the second group of information may include at least one of the following types of information: NDI information, TPC information, redundancy version information, HARQ process number information, frequency domain resource allocation (Frequency domain resource assignment) information, time domain resource allocation (Time domain resource assignment) information, modulation and coding scheme information, and antenna port (Antenna ports) information. The antenna port information is used to indicate a DMRS antenna port that is being used. That the information meets the second preset rule may be: a value of the NDI information is a thirty-fifth preset value (for example, all bits of the information are set to 0), a value of the TPC information is a thirty-sixth preset value (for example, all bits of the information are set to 0), a value of the redundancy version information is a thirty-seventh preset value (for example, all bits of the information are set to 0), a value of the HARQ process number information is a thirty-eighth preset value (for example, all bits of the information are set to 0), a value of the frequency domain resource allocation information is a thirty-ninth preset value (for example, all bits of the information are set to 1), a value of the time domain resource allocation information is a fortieth preset value (for example, all bits of the information are set to 1), a value of the modulation and coding scheme information is a forty-first preset value (for example, all bits of the information are set to 1), and a value of the antenna port information is a forty-second preset value (for example, all bits of the information are set to 1). Besides the foregoing information (to be specific, at least one of the NDI information, the TPC information, the redundancy version information, the HARQ process number information, the frequency domain resource allocation information, the time domain resource allocation information, the modulation and coding scheme information, and the antenna port information), the second group of information may further include additional information, for example without limitation to, at least one of the following pieces of information: virtual resource block (Virtual Resource Block, VRB) to physical resource block (Physical Resource Block, PRB) mapping (VRB-to-PRB mapping) information, frequency hopping flag (Frequency hopping flag) information, precoding information and number of layers (Precoding information and number of layers), code block group (Code Block Group, CBG) transmission information (CBG transmission information), DMRS sequence initialization (DMRS sequence initialization) information, bit rate relationship information, and CSI request information. It should be noted that some or all of the additional information may not always exist in transmission control information (for example, the second transmission control information), and existence of some or all of the additional information may be indicated by other information. Based on the fact that the information includes the foregoing additional information, that the information meets the second preset rule may further be: a value of the virtual resource block to physical resource block mapping information is a forth-third preset value (for example, all bits of the information are set to 1), a value of the frequency hopping flag information is a forty-fourth preset value (for example, all bits of the information are set to 1), a value of the precoding information and number of layers is a forty-fifth preset value (for example, all bits of the information are set to 1), a value of the CBG transmission information is a forth-sixth preset value (for example, all bits of the information are set to 1), a value of the DMRS sequence initialization information is a forty-seventh preset value (for example, all bits of the information are set to 1), a value of the bit rate relationship information is a forty-eighth preset value (for example, all bits of the information are set to 1), a value of the CSI request information is a forty-ninth preset value (for example, all bits of the information are set to 0).

It should be noted that, in a specific implementation process, one or more semi-persistent channel measurements may be stopped. For an indication on a semi-persistent channel measurement that needs to be stopped, refer to the foregoing indication on the semi-persistent channel measurement that needs to be started. For example, the semi-persistent channel measurement that needs to be stopped may be indicated in a same manner as the foregoing semi-persistent channel measurement that needs to be started. Therefore, the second transmission control information may further include the indication to the semi-persistent channel measurement that needs to be stopped. Still further, the indication may be an indication on information associated with the semi-persistent channel measurement that needs to be stopped, for example without limitation to, an indication on at least one piece of basic measurement information, for example without limitation to, the trigger state or the measurement link described above. Still further, the indication may be included in CSI request information.

Related content in the TPC information, the DMRS cyclic shift information, and the MCS information has been described above in detail. Therefore, details are not described herein again. For the resource allocation information, refer to information about resource block assignment and hopping resource allocation (Resource Block Assignment and Hopping Resource Allocation) in the LTE standard. Technical content in the information is clearly described in the prior art, and details are not described in this embodiment of the present invention. For functions and meanings of the first group of information, the second group of information, and other related information mentioned in this specification, refer to related definitions in the LTE standard or the latest NR related standard or contribution. Details are not described herein. For example, for the bit rate relationship information, refer to a beta offset indicator (beta offset indicator) in the prior art. The bit rate relationship information is used to describe a bit rate relationship between uplink control information (Uplink Control Information, UCI) and a PUSCH. It should be noted that, a person skilled in the art should understand that, in addition to the second group of information, the second transmission control information may further include other information. Information content included in the second transmission control information is not limited in this embodiment of the present invention.

For the TPC information, the DMRS cyclic shift information, the MCS information, the CSI request information, and the resource allocation information mentioned above, refer to the existing LTE standard. In a next generation wireless communications standard, an attribute such as a specific meaning, a name, or an information length of the foregoing information may change. The technical solution provided in this embodiment of the present invention may also be applied to changed information.

In addition, the second group of information may include at least one type of information. It is not difficult to understand that at least one type of new information may be further introduced to achieve the foregoing purpose. In this case, the second group of information may use existing information, the introduced new information, or a combination thereof. As described above, for example, when the first group of information includes one piece of information, and the information is the introduced new information, it is set that the first preset rule may be: a preset value is assigned to the information. For example, if the information includes two bits, it is set that the first preset rule may be: when the two bits are 01, the semi-persistent channel measurement is started. In this case, the second group of information may also include the information, and the second preset rule may be set as: another preset value is assigned to the information. For example, when the two bits are 11, the semi-persistent channel measurement is stopped.

It should be noted that, in practice, for information that both appears in the first group of information in the first transmission control information and in the second group of information in the second transmission control information (for example, the TPC information, the DMRS cyclic shift information, and the MCS information), a value of the information in the first transmission control information may be the same as or different from a value of the information in the second transmission control information. In other words, the first preset value is the same as or different from the fifth preset value, the second preset value is the same as or different from the sixth preset value, and the third preset interval is the same as or different from the seventh preset interval.

In addition, in practice, each of the foregoing plurality of preset values, for example, the first preset value, the second preset value, the fourth preset value, the fifth preset value, the sixth preset value, or the eighth preset value, may be corresponding to more than one specific preset value. For example, there may be a plurality of first preset values. In this case, it will work if the value of the TPC information is any one of the plurality of first preset values. Likewise, each of the foregoing plurality of preset intervals, for example, the third preset interval or the seventh preset interval, may be corresponding to more than one specific preset interval. For example, there may be a plurality of third preset intervals. In this case, it will work if the value of the MCS information falls into any one of these third preset intervals.

A specific example of the second preset condition is as follows:

**Table 2**

| **DCI format 0** | |
|---|---|
| TPC command for scheduled PUSCH | All bits in a bitmap (bitmap) corresponding to the information are 0, and the bitmap includes at least one bit. |
| Cyclic shift DMRS | If the information exists, all bits in a bitmap corresponding to the information are 0, and the bitmap includes at least one bit. |
| Modulation and coding scheme and redundancy version | A reserved value (for example, 11110) is assigned to an MCS. The reserved value does not indicate an authentic and valid MCS. For example, there is no MCS such as a |
| | modulation scheme or a bit rate corresponding to 11110. |
| Resource block assignment and hopping resource allocation | All bits in a bitmap corresponding to the information are 1, and the bitmap includes at least one bit. |

It may be learned from the foregoing example that values of the foregoing four types of information are limited in the second preset condition, and a DCI format is limited to a format 0.

Step 216: The user equipment receives the second transmission control information.

Step 218: Stop the semi-persistent channel measurement when the second transmission control information meets the second preset condition.

It is not difficult to understand that steps 212 to 218 are a semi-persistent channel measurement stopping procedure.

It should be noted that the method shown in FIG. 2 separately specifies the semi-persistent channel measurement starting procedure and the semi-persistent channel measurement stopping procedure. However, in a specific implementation process, the stopping procedure may not be specified, and the starting procedure is considered as starting a new semi-persistent channel measurement, and at the same time, stopping a current semi-persistent channel measurement. The current semi-persistent channel measurement is a semi-persistent channel measurement that is being performed before and at a moment at which the first transmission control information is received. In this way, that the semi-persistent channel measurement is started when the first transmission control information meets the first preset condition described above is specifically implemented as follows: When the first transmission control information meets the first preset condition, starting the new semi-persistent channel measurement and stopping the current semi-persistent channel measurement.

It may be learned that, for the semi-persistent channel measurement, an embodiment of the present invention provides a technical solution, to instruct user equipment to start and/or stop the semi-persistent channel measurement.

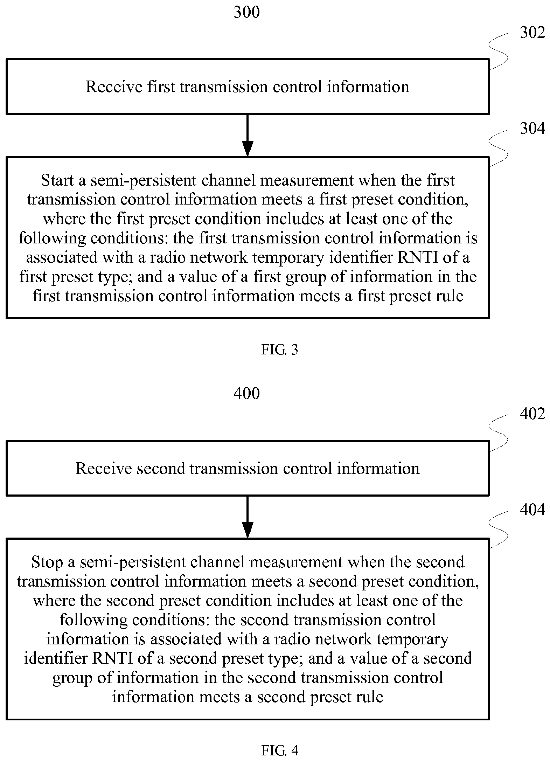

For ease of understanding an operation performed in a process in which the user equipment starts and/or stops the semi-persistent channel measurement, a specific operation of the user equipment is described below with reference to FIG. 3 and FIG. 4.

FIG. 3 is an example flowchart of a channel measurement method 300 according to an embodiment of the present invention. In a specific implementation process, the method 300 may be performed by the user equipment.

Step 302: Receive first transmission control information.

Step 304: Start a semi-persistent channel measurement when the first transmission control information meets a first preset condition, where the first preset condition includes at least one of the following conditions:
the first transmission control information is associated with a radio network temporary identifier RNTI of a first preset type; and
a value of a first group of information in the first transmission control information meets a first preset rule.

The technical details included in the method 300 are described above in detail with reference to the method 200. Therefore, details are not described herein again.

FIG. 4 is an example flowchart of a channel measurement method 400 according to an embodiment of the present invention. In a specific implementation process, the method 400 may be performed by the user equipment.

Step 402: Receive second transmission control information.

Step 404: Stop a semi-persistent channel measurement when the second transmission control information meets a second preset condition, where the second preset condition includes at least one of the following conditions:
the second transmission control information is associated with a radio network temporary identifier RNTI of a second preset type; and
a value of a second group of information in the second transmission control information meets a second preset rule.

The technical details included in the method 400 are described above in detail with reference to the method 200. Therefore, details are not described herein again.

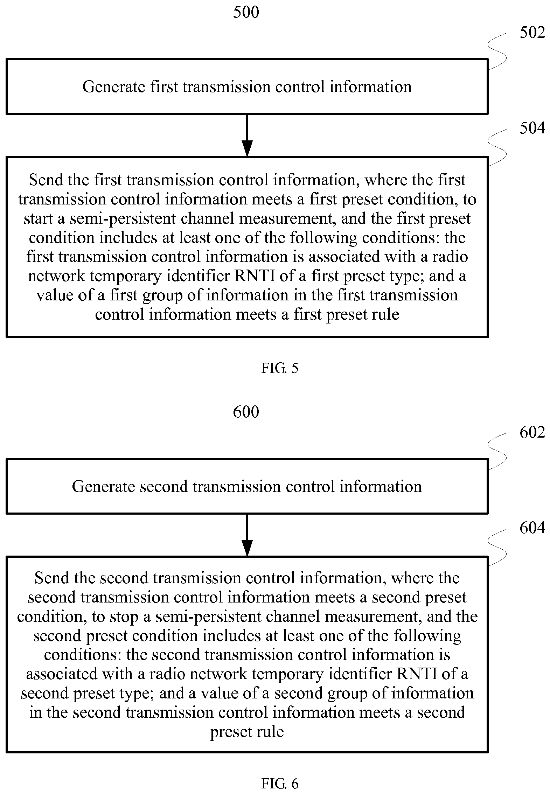

For ease of understanding an operation performed in a process in which an access device starts and/or stops the semi-persistent channel measurement, a specific operation of the access device is described below with reference to FIG. 5 and FIG. 6.

FIG. 5 is an example flowchart of a channel measurement method 500 according to an embodiment of the present invention. In a specific implementation process, the method 500 may be performed by the access device.

Step 502: Generate first transmission control information.

Step 504: Send the first transmission control information, where the first transmission control information meets a first preset condition, to start a semi-persistent channel measurement, and the first preset condition includes at least one of the following conditions:
the first transmission control information is associated with a radio network temporary identifier RNTI of a first preset type; and
a value of a first group of information in the first transmission control information meets a first preset rule.

The technical details included in the method 500 are described above in detail with reference to the method 200. Therefore, details are not described herein again.

FIG. 6 is an example flowchart of a channel measurement method 600 according to an embodiment of the present invention. In a specific implementation process, the method 600 may be performed by the access device.

Step 602: Generate second transmission control information.

Step 604: Send the second transmission control information, where the second transmission control information meets a second preset condition, to stop a semi-persistent channel measurement, and the second preset condition includes at least one of the following conditions:
the second transmission control information is associated with a radio network temporary identifier RNTI of a second preset type; and
a value of a second group of information in the second transmission control information meets a second preset rule.

The technical details included in the method 600 are described above in detail with reference to the method 200. Therefore, details are not described herein again.

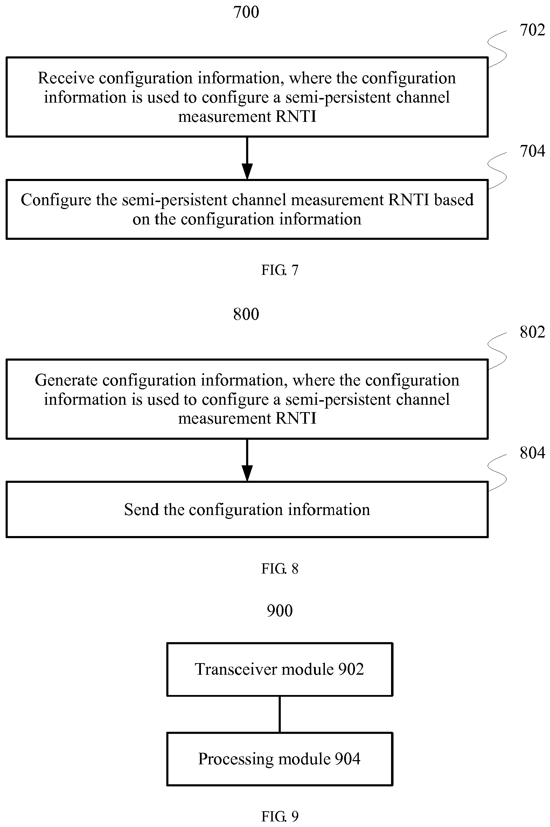

An embodiment of the present invention further provides a method for configuring a semi-persistent channel measurement RNTI. The method is described below with reference to FIG. 7 and FIG. 8.

FIG. 7 is an example flowchart of a configuration method 700 according to an embodiment of the present invention. In a specific implementation process, the method 700 may be performed by user equipment.

Step 702: Receive configuration information, where the configuration information is used to configure a semi-persistent channel measurement RNTI.

Step 704: Configure the semi-persistent channel measurement RNTI based on the configuration information.

The configuration information may be sent by using, for example without limitation to, one of the following signaling:
physical layer signaling;
media access control layer signaling; and
radio resource control signaling.

The physical layer signaling is also referred to as layer 1 (Layer 1, L1) signaling, and may be generally carried in a control part in a physical layer frame. A typical example of the L1 signaling is downlink control information (Downlink Control Information, DCI) carried in a physical downlink control channel (Physical Downlink Control Channel, PDCCH) and uplink control information (Uplink Control Information, UCI) carried in a physical uplink control channel (Physical Uplink Control Channel, PUCCH) that are defined in the LTE standard. In some cases, the L1 signaling may be further carried in a data part in the physical layer frame. For example, the UCI may be carried in a physical uplink shared channel (Physical Uplink Shared Channel, PUSCH) sometimes. It can be learned that a sending period or a signaling period of the L1 signaling is usually a period of the physical layer frame. Therefore, the signaling is generally used to implement some dynamic control to transmit some frequently changed information, for example, resource allocation information may be transmitted by using physical layer signaling.

The media access control (Media Access Control, MAC) layer signaling is layer 2 (Layer 2) signaling, and may be generally carried in, for example without limitation to, a frame header of a layer 2 frame. The frame header may further carry, for example without limitation to, information such as a source address and a destination address. In addition to the frame header, the layer 2 frame generally further includes a frame body. In some cases, the L2 signaling may also be carried in the frame body of the layer 2 frame. A typical example of the layer 2 signaling is signaling carried in a frame control (Frame Control) field in a frame header of a MAC frame in the family of 802.11 standards, or a MAC control entity (Control Entity, MAC-CE) defined in some protocols. The layer 2 frame may be generally carried in a data part in a physical layer frame. The configuration information may also be sent by using other layer 2 signaling other than the media access control layer signaling.

The radio resource control (Radio Resource Control, RRC) signaling is a layer 3 (Layer 3) signaling, and is generally some control messages. The L3 signaling may be generally carried in the frame body of the layer 2 frame. A sending period or a control period of the L3 signaling is usually relatively long. The L3 signaling is applicable to sending some information that does not change frequently. For example, in some existing communications standards, the L3 signaling is generally used to carry some configuration information. The configuration information may also be sent by using other layer 3 signaling other than the RRC signaling.

The foregoing description is merely a principle description of the physical layer signaling, the MAC layer signaling, the RRC signaling, the layer 1 signaling, the layer 2 signaling, and the layer 3 signaling. For specific details about the three types of signaling, refer to the prior art. Therefore, details are not described herein.

FIG. 8 is an example flowchart of a configuration method 800 according to an embodiment of the present invention. In a specific implementation process, the method 800 may be performed by an access device.

Step 802: Generate configuration information, where the configuration information is used to configure a semi-persistent channel measurement RNTI.

Step 804: Send the configuration information.

Related content of the configuration information and other features is described above in detail. Therefore, details are not described herein again.

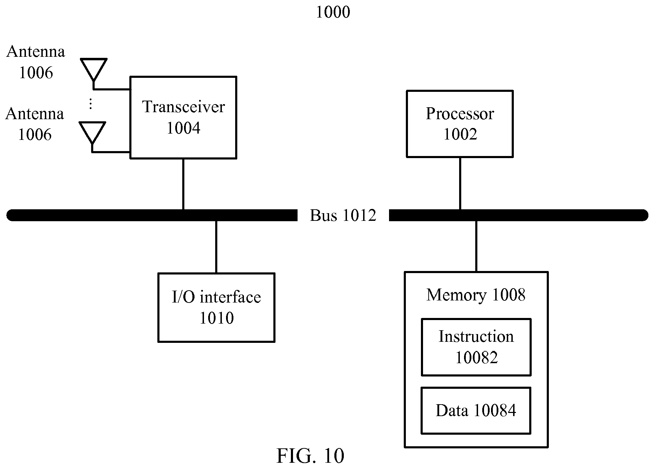

An embodiment of the present invention further provides a communications device. The communications device may be the user equipment or the access device mentioned above. A structure of the communications device is described below with reference to FIG. 9 and FIG. 10.

FIG. 9 is an example schematic diagram of a logical structure of a communications device 900 according to an embodiment of the present invention. In a specific implementation process, the communications device 900 may be the access device or the user equipment described above. As shown in FIG. 9, the communications device 900 includes a transceiver module 902 and a processing module 904.

When the communications device 900 is the user equipment, the transceiver module 902 may be configured to perform steps 302, 402, and 702, and the processing module 904 is configured to perform steps 304, 404, and 704.

When the communications device 900 is the access device, the transceiver module 902 may be configured to perform steps 504, 604, and 804, and the processing module 904 is configured to perform steps 502, 602, and 802.

FIG. 10 is an example schematic diagram of a hardware structure of a communications device 1000 according to an embodiment of the present invention. In a specific implementation process, the communications device 1000 may be the access device or the user equipment described above. As shown in FIG. 10, the communications device 1000 includes a processor 1002, a transceiver 1004, a plurality of antennas 1006, a memory 1008, an I/O (input/output, Input/Output) interface 1010, and a bus 1012. The memory 1008 is further configured to store an instruction 10082 and data 10084. In addition, the processor 1002, the transceiver 1004, the memory 1008, and the I/O interface 1010 are communicatively connected to each other by using the bus 1012. The plurality of antennas 1006 are connected to the transceiver 1004. In a specific implementation process, the processor 1002, the transceiver 1004, the memory 1008, and the I/O interface 1010 may also be communicatively connected to each other in another connection manner other than using the bus 1012.

The processor 1002 may be a general purpose processor, for example without limitation to, a central processing unit (Central Processing Unit, CPU), or may be a dedicated processor, for example without limitation to, a digital signal processor (Digital Signal Processor, DSP), an application-specific integrated circuit (Application-Specific Integrated Circuit, ASIC), a field programmable gate array (Field Programmable Gate Array, FPGA), and the like. In addition, the processor 1002 may be a combination of a plurality of processors. The processor 1002 may be a processor specifically designed to perform specific steps and/or operations, or a processor that reads and executes the instruction 10082 stored in the memory 1008 to perform the specific steps and/or operations. The processor 1002 may need to use the data 10084 when performing the specific steps and/or operations. Specially, the processor 1002 is configured to perform an operation of the processing module 904.

The transceiver 1004 sends and receives a signal by using at least one of the plurality of antennas 1006. Specially, the transceiver 1004 is configured to perform an operation of the transceiver module 902.

The memory 1008 may be storage media of a plurality of types, for example, a random access memory (Random Access Memory, RAM), a read-only memory (Read-Only Memory, ROM), a nonvolatile RAM (Nonvolatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 1008 is specifically configured to store the instruction 10082 and the data 10084. The processor 1002 may read and execute the instruction 10082 stored in the memory 1008 to perform specific steps and/or operations, and may need to use the data 10084 when performing the specific operations and/or steps.

The I/O interface 1010 is configured to receive an instruction and/or data from a peripheral device, and output an instruction and/or data to the peripheral device.

It should be noted that, in a specific implementation process, the communications device 1000 may further include other hardware components, which are not enumerated in this specification.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

To sum up, the foregoing descriptions are merely embodiments of the present invention, but are not intended to limit the protection scope of the present invention. Any modification, replacement, or improvement made without departing from the principle of the present invention as defined in the claims shall fall within the protection scope of the present invention.

## Claims

1. A channel measurement method, comprising:
receiving (206), by a user equipment, first transmission control information;
starting (208), by the user equipment, a semi-persistent channel measurement when the first transmission control information meets a first preset condition, wherein the first preset condition comprises at least following conditions:
the first transmission control information is downlink control information , DCI, where
the DCI has a preset format;
the first transmission control information is associated with a semi-persistent channel measurement radio network temporary identifier, RNTI;
the semi-persistent channel measurement RNTI being obtained based on a user identifier according to a correspondence table of the semi-persistent channel measurement RNTI and the user identifier; and
a value of a first group of information in the first transmission control information meets a first preset rule when the DCI has the preset format, wherein the first group of information comprises a redundancy version, RV, and a hybrid automatic repeat request, HARQ process number, transmit power control, TPC, information, and a new data indicator, NDI, a value of a first group of information in the first transmission control information meets a first preset rule comprises all bits of the RV are 0, all bits of the HARQ process number are 0, all bits of the TPC information are 0 and all bits of the NDI are set to 0.

2. The method according to claim 1, wherein there are one or more semi-persistent channel measurements.

3. A channel measurement method according to claim 1 or 2, the method additionally comprising:
receiving (216), by the user equipment, second transmission control information;
stopping (218) ,by the user equipment, a second semi-persistent channel measurement when the second transmission control information meets a second preset condition, wherein the second preset condition comprises at least following conditions:
the second transmission control information is associated with a semi-persistent channel measurement radio network temporary identifier, RNTI; and
a value of a second group of information in the second transmission control information meets a second preset rule, wherein the second group of information comprises a redundancy version, RV, a hybrid automatic repeat request, HARQ process number, and a modulation and coding scheme, MCS, the a value of a second group of information in the second transmission control information meets a second preset rule comprises all bits of the RV are 0, all bits of the HARQ process number are 0, and all bits of the MCS are 1.

4. User equipment, comprising:
a transceiver module (902), configured to receive first transmission control information; and
a processing module (904), configured to start a semi-persistent channel measurement when the first transmission control information meets a first preset condition, wherein the first preset condition comprises at least following conditions:
the first transmission control information is downlink control information , DCI,
where
the DCI has a preset format;
the first transmission control information is associated with a semi-persistent channel measurement radio network temporary identifier, RNTI;
the semi-persistent channel measurement RNTI being obtained based on a user identifier according to a correspondence table of the semi-persistent channel measurement RNTI and the user identifier; and
a value of a first group of information in the first transmission control information meets a first preset rule when the DCI has the preset format, wherein the first group of information comprises a redundancy version, RV, and a hybrid automatic repeat request, HARQ process number, transmit power control, TPC, information, and a new data indicator, NDI, a value of a first group of information in the first transmission control information meets a first preset rule comprises all bits of the RV are 0, all bits of the HARQ process number are 0, all bits of the TPC information are 0 and all bits of the NDI are set to 0.

5. The user equipment according to claim 4, wherein there are one or more semi-persistent channel measurements.

6. The user equipment according to claim 4 or 5,
wherein the transceiver module (902) is configured to receive second transmission control information; and
wherein the processing module (904) is configured to stop a second semi-persistent channel measurement when the second transmission control information meets a second preset condition, wherein the second preset condition comprises at least following conditions:
the second transmission control information is associated with a semi-persistent channel measurement radio network temporary identifier, RNTI; and
a value of a second group of information in the second transmission control information meets a second preset rule, wherein the second group of information comprises a redundancy version, RV, a hybrid automatic repeat request, HARQ process number, and a modulation and coding scheme, MCS, the a value of a second group of information in the second transmission control information meets a second preset rule comprises all bits of the RV are 0, all bits of the HARQ process number are 0, and all bits of the MCS are 1.

## Patentansprüche

1. Kanalmessungsverfahren, das Folgendes umfasst:
Empfangen (206), durch eine Benutzereinrichtung, von ersten Übertragungssteuerinformationen;
Starten (208), durch die Benutzereinrichtung, einer semi-persistenten Kanalmessung, wenn die ersten Übertragungssteuerinformationen eine erste voreingestellte Bedingung erfüllen, wobei die erste voreingestellte Bedingung wenigstens folgende Bedingungen umfasst:
die ersten Übertragungssteuerinformationen sind Downlink-Steuerinformationen (downlink control information - DCI), wobei die DCI ein voreingestelltes Format aufweisen;
die ersten Übertragungssteuerinformationen sind einem temporären Funknetzwerkbezeichner (radio network temporary identifier - RNTI) einer semi-persistenten Kanalmessung zugehörig;
der RNTI der semi-persistenten Kanalmessung wird basierend auf einem Benutzerbezeichner gemäß einer Entsprechungstabelle des RNTI der semi-persistenten Kanalmessung und dem Benutzerbezeichner erhalten; und
ein Wert einer ersten Gruppe von Informationen in den ersten Übertragungssteuerinformationen erfüllt eine erste voreingestellte Regel, wenn die DCI das voreingestellte Format aufweisen, wobei die erste Gruppe von Informationen eine Redundanzversion (RV) und eine Hybride-Automatische-Wiederholungsanforderungs(hybrid automatic repeat request - HARQ)-Vorgangsnummer, Übertragungsleistungssteuer(transmit power control - TPC)-Informationen und ein Neue-Daten-Kennzeichen (new data indicator- NDI) umfasst, ein Wert einer ersten Gruppe von Informationen in den ersten Übertragungssteuerinformationen eine erste voreingestellte Regel erfüllt, die umfasst, dass alle Bits der RV 0 sind, alle Bits der HARQ-Vorgangsnummer 0 sind, alle Bits der TPC-Informationen 0 sind und alle Bits des NDI auf 0 gesetzt werden.

2. Verfahren nach Anspruch 1, wobei eine oder mehrere semi-persistente Kanalmessungen vorliegen.

3. Kanalmessungsverfahren nach Anspruch 1 oder 2, wobei das Verfahren zusätzlich Folgendes umfasst:
Empfangen (216), durch die Benutzereinrichtung, von zweiten Übertragungssteuerinformationen;
Stoppen (218), durch die Benutzereinrichtung, einer zweiten semi-persistenten Kanalmessung, wenn die zweiten Übertragungssteuerinformationen eine zweite voreingestellte Bedingung erfüllen, wobei die zweite voreingestellte Bedingung wenigstens folgende Bedingungen umfasst:
die zweiten Übertragungssteuerinformationen sind einem temporären Funknetzwerkbezeichner (RNTI) der semi-persistenten Kanalmessung zugehörig; und
ein Wert einer zweiten Gruppe von Informationen in den zweiten Übertragungssteuerinformationen erfüllt eine zweite voreingestellte Regel, wobei die zweite Gruppe von Informationen eine Redundanzversion (RV), eine Hybride-Automatische-Wiederholungsanforderungs(HARQ)-Vorgangsnummer und ein Modulations- und Codierschema (MCS) umfasst, ein Wert einer zweiten Gruppe von Informationen in den zweiten Übertragungssteuerinformationen eine zweite voreingestellte Regel erfüllt, die umfasst, dass alle Bits der RV 0 sind, alle Bits der HARQ-Vorgangsnummer 0 sind und alle Bits des MCS 1 sind.

4. Benutzereinrichtung, die Folgendes umfasst:
ein Sendeempfängermodul (902), das konfiguriert ist, um erste Übertragungssteuerinformationen zu empfangen; und
ein Verarbeitungsmodul (904), das konfiguriert ist, um eine semi-persistente Kanalmessung zu starten, wenn die ersten Übertragungssteuerinformationen eine erste voreingestellte Bedingung erfüllen, wobei die erste voreingestellte Bedingung wenigstens folgende Bedingungen umfasst:
die ersten Übertragungssteuerinformationen sind Downlink-Steuerinformationen (DCI), wobei die DCI ein voreingestelltes Format aufweisen;
die ersten Übertragungssteuerinformationen sind einem temporären Funknetzwerkbezeichner (RNTI) der semi-persistenten Kanalmessung zugehörig;
der RNTI der semi-persistenten Kanalmessung wird basierend auf einem Benutzerbezeichner gemäß einer Entsprechungstabelle des RNTI der semi-persistenten Kanalmessung und dem Benutzerbezeichner erhalten; und
ein Wert einer ersten Gruppe von Informationen in den ersten Übertragungssteuerinformationen erfüllt eine erste voreingestellte Regel, wenn die DCI das voreingestellte Format aufweisen, wobei die erste Gruppe von Informationen eine Redundanzversion (RV) und eine Hybride-Automatische-Wiederholungsanforderungs(HARQ)-Vorgangsnummer, Übertragungsleistungssteuer(TPC)-lnformationen und ein Neue-Daten-Kennzeichen (NDI) umfasst, ein Wert einer ersten Gruppe von Informationen in den ersten Übertragungssteuerinformationen eine erste voreingestellte Regel erfüllt, die umfasst, dass alle Bits der RV 0 sind, alle Bits der HARQ-Vorgangsnummer 0 sind, alle Bits der TPC-Informationen 0 sind und alle Bits des NDI auf 0 gesetzt werden.

5. Benutzereinrichtung nach Anspruch 4, wobei eine oder mehrere semi-persistente Kanalmessungen vorliegen.

6. Benutzereinrichtung nach Anspruch 4 oder 5, wobei das Sendeempfängermodul (902) konfiguriert ist, um zweite Übertragungssteuerinformationen zu empfangen; und
wobei das Verarbeitungsmodul (904) konfiguriert ist, um eine zweite semi-persistente Kanalmessung zu stoppen, wenn die zweiten Übertragungssteuerinformationen eine zweite voreingestellte Bedingung erfüllen, wobei die zweite voreingestellte Bedingung wenigstens folgende Bedingungen umfasst:
die zweiten Übertragungssteuerinformationen sind einem temporären Funknetzwerkbezeichner (RNTI) der semi-persistenten Kanalmessung zugehörig; und
ein Wert einer zweiten Gruppe von Informationen in den zweiten Übertragungssteuerinformationen erfüllt eine zweite voreingestellte Regel, wobei die zweite Gruppe von Informationen eine Redundanzversion (RV), eine Hybride-Automatische-Wiederholungsanforderungs(HARQ)-Vorgangsnummer und ein Modulations- und Codierschema (MCS) umfasst, ein Wert einer zweiten Gruppe von Informationen in den zweiten Übertragungssteuerinformationen eine zweite voreingestellte Regel erfüllt, die umfasst, dass alle Bits der RV 0 sind, alle Bits der HARQ-Vorgangsnummer 0 sind und alle Bits des MCS 1 sind.

## Revendications

1. Procédé de mesure de canal, comprenant :
la réception (206), par un équipement utilisateur, des premières informations de commande de transmission ;
le démarrage (208), par l'équipement utilisateur, d'une mesure de canal semi-persistant lorsque les premières informations de commande de transmission remplissent une première condition prédéfinie, la première condition prédéfinie comprenant au moins les conditions suivantes :
les premières informations de commande de transmission sont des informations de commande de liaison descendante, DCI, où les DCI ont un format prédéfini ;
les premières informations de commande de transmission sont associées à un identifiant temporaire de réseau radio de mesure de canal semi-persistant, RNTI ;
le RNTI de mesure de canal semi-persistant étant obtenue sur la base d'un identifiant d'utilisateur selon une table de correspondance du RNTI de mesure de canal semi-persistant et de l'identifiant d'utilisateur ; et
une valeur d'un premier groupe d'informations dans les premières informations de commande de transmission remplit une première règle prédéfinie lorsque les DCI ont le format prédéfini, le premier groupe d'informations comprenant une version de redondance, RV, et un numéro de processus de demande de répétition automatique hybride, HARQ, des informations de commande de puissance de transmission, TPC, et un indicateur de nouvelles données, NDI, une valeur d'un premier groupe d'informations dans les premières informations de commande de transmission remplissent une première règle prédéfinie comprend tous les bits de la RV sont 0, tous les bits de la HARQ le numéro de processus sont 0, tous les bits des informations TPC sont 0 et tous les bits du NDI sont mis à 0.

2. Procédé selon la revendication 1, dans lequel il existe une ou plusieurs mesures de canal semi-persistantes.

3. Procédé de mesure de canal selon la revendication 1 ou la revendication 2, le procédé comprenant en outre :
la réception (216), par l'équipement utilisateur, des secondes informations de commande de transmission ;
l'arrêt (218), par l'équipement utilisateur, d'une seconde mesure de canal semi-persistant lorsque les secondes informations de commande de transmission remplissent une seconde condition prédéfinie, la seconde condition prédéfinie comprenant au moins les conditions suivantes :
les secondes informations de commande de transmission sont associées à un identifiant temporaire de réseau radio de mesure de canal semi-persistant, RNTI ; et
une valeur d'un second groupe d'informations dans les secondes informations de commande de transmission satisfait à une seconde règle prédéfinie, le second groupe d'informations comprenant une version de redondance, RV, un numéro de processus de demande de répétition automatique hybride, HARQ et un schéma de modulation et de codage, MCS, la valeur d'un second groupe d'informations dans les secondes informations de commande de transmission remplissent une seconde règle prédéfinie comprenant que tous les bits de la RV sont 0, tous les bits du numéro de processus HARQ sont 0 et tous les bits du MCS sont 1.

4. Équipement utilisateur, comprenant :
un module d'émetteur-récepteur (902), configuré pour recevoir des premières informations de commande de transmission ; et
un module de traitement (904), configuré pour démarrer une mesure de canal semi-persistant lorsque les premières informations de commande de transmission remplissent une première condition prédéfinie, la première condition prédéfinie comprenant au moins les conditions suivantes :
les premières informations de commande de transmission sont des informations de commande de liaison descendante, DCI, où les DCI ont un format prédéfini ;
les premières informations de commande de transmission sont associées à un identifiant temporaire de réseau radio de mesure de canal semi-persistant, RNTI ;
le RNTI de mesure de canal semi-persistant étant obtenue sur la base d'un identifiant d'utilisateur selon une table de correspondance du RNTI de mesure de canal semi-persistant et de l'identifiant d'utilisateur ; et
une valeur d'un premier groupe d'informations dans les premières informations de commande de transmission remplit une première règle prédéfinie lorsque les DCI ont le format prédéfini, le premier groupe d'informations comprenant une version de redondance, RV, et un numéro de processus de demande de répétition automatique hybride, HARQ, des informations de commande de puissance de transmission, TPC, et un indicateur de nouvelles données, NDI, une valeur d'un premier groupe d'informations dans les premières informations de commande de transmission remplissent une première règle prédéfinie comprend tous les bits de la RV sont 0, tous les bits de la HARQ le numéro de processus sont 0, tous les bits des informations TPC sont 0 et tous les bits du NDI sont mis à 0.

5. Équipement utilisateur selon la revendication 4, dans lequel il existe une ou plusieurs mesures de canal semi-persistant.

6. Équipement utilisateur selon la revendication 4 ou 5, dans lequel le module émetteurrécepteur (902) est configuré pour recevoir des secondes informations de commande de transmission ; et
dans lequel le module de traitement (904) est configuré pour arrêter une seconde mesure de canal semi-persistant lorsque les secondes informations de commande de transmission remplissent une seconde condition prédéfinie, la seconde condition prédéfinie comprenant au moins les conditions suivantes :
les secondes informations de commande de transmission sont associées à un identifiant temporaire de réseau radio de mesure de canal semi-persistant, RNTI ; et
une valeur d'un second groupe d'informations dans les secondes informations de commande de transmission satisfait à une seconde règle prédéfinie, le second groupe d'informations comprenant une version de redondance, RV, un numéro de processus de demande de répétition automatique hybride, HARQ et un schéma de modulation et de codage, MCS, la valeur d'un second groupe d'informations dans les secondes informations de commande de transmission remplissent une seconde règle prédéfinie comprenant que tous les bits de la RV sont 0, tous les bits du numéro de processus HARQ sont 0 et tous les bits du MCS sont 1.
